# EUROPEAN PATENT SPECIFICATION

(11) **EP 0 495 261 B1**
(45) Date of publication and mention of the grant of the patent: **08.06.1994**
(21) Application number: 91203308.1
(22) Date of filing: 16.12.1991
(51) Int. Cl.: B65G 47/68

(54) **A device for processing objects of different shapes and dimensions**
Vorrichtung zum Behandeln von Gegenständen unterschiedlicher Form und Grösse
Dispositif pour manoeuvrer des pièces de formes et de dimensions différentes

(30) Priority: 17.12.1990 NL 9002773
(43) Date of publication of application: 22.07.1992
(73) Proprietor: VANDERLANDE INDUSTRIES NEDERLAND B.V., NL-5466 RB Veghel (NL)
(72) Inventor: Van den Goor, Jacobus Marie, NL-5674 SH Nuenen (NL)
(74) Representative: Van kan, Johan Joseph Hubert, Ir.

(56) References cited:
- FR-A- 1 473 826
- FR-A- 2 228 692
- GB-A- 1 110 794

## Description

The invention relates to a device for processing objects of different shapes and dimensions, which are supplied indiscriminately, in such a manner that they can be discharged one behind the other in a row by means of a discharge conveyor, a number of auxiliary conveyors being arranged parallel and adjacent to each other upstream of the discharge conveyor, the longitudinal axes of said auxiliary conveyors including an angle deviating from 90° with the longitudinal axis of the discharge conveyor along at least part of their length, in such a manner that, when seen in the longitudinal direction of the discharge conveyor, the downstream ends of the auxiliary conveyors are located closer to the discharge conveyor than the upstream ends of the auxiliary conveyors, and a drive mechanism for the auxiliary conveyors being constructed in such a manner that an auxiliary conveyor located closer to the discharge conveyor moves faster than an auxiliary conveyor located further from the discharge conveyor, whilst at least one guide means extending transversely to the auxiliary conveyors is provided near the downstream ends of said auxiliary conveyors.

Such a device is known from GB-A-1,110,794. With this known device the auxiliary conveyors are each comprised of a few chains arranged side by side, said chains being guided in such a manner that upstream ends of the chains extend at least substantially perpendicularly to the discharge conveyor and that further parts joining said ends extend at an angle with respect to the longitudinal axis of the discharge conveyor in the direction of the discharge conveyor. A guide means, which is located in the extension of one side of the discharge conveyor is thereby provided, said guide means extending across the downstream ends of the auxiliary conveyors.

Due to the fact that a large number of chains are used, which comprise parts including an angle with each other, this known device has a quite complicated construction, which is strongly liable to wear. Furthermore this device is only suitable for processing equally shaped objects having a circular section, with a diameter which is approximately equal to the width of the track formed by a few chains located side by side, which are driven at the same speed. When random objects having different shapes are processed by means of such a device it will not be possible to achieve a suitable arrangement of the objects, in such a manner that they are supplied to the discharge conveyor one after the other. With this known device it will furthermore be necessary for the objects to have a flat bottom, without any projecting parts, in order to prevent that such projecting parts get wedged between the chains or the chain links.

The object of the invention is therefore to obtain a device of the above kind, wherein the drawbacks of the known device can be avoided.

According to the invention this can be achieved in that the auxiliary conveyors are comprised of endless rectilinear conveyor belts located side by side, a number of elongated guide means being provided near the downstream ends of said conveyor belts, the end of each guide means directed towards the discharge conveyor, when seen in the direction of movement of the conveyor belts towards the guide means, being located at some distance before the end remote from the discharge conveyor of an adjacent guide means that is located closer to the discharge conveyor.

The rectilinear conveyor belts, whose construction and drive may be simple and solid, move the objects mainly in the direction of the guide means, without effecting thereby that the direction of movement of an object present on a conveyor belt is gradually diverted in the direction of the conveyor belt.

The objects striking the guide means are pushed in the direction of the discharge conveyor. A rotary motion is thereby imparted to the objects, not only as a result of the fact that at a given moment the objects are lying on two adjacent conveyor belts, but also as a result of the staggered arrangement of the guide means. In practice it has become apparent that also this staggered arrangement of the guide means contributes effectively towards imparting a rotary motion to the objects supplied by means of the conveyor belts, such as suitcases or the like, whereby the objects, which rotate and move in the direction of the discharge conveyor, appear to push each other in such a manner that a displacement in the direction of the discharge conveyor of objects being regularly arranged one behind the other is effected near the end of the discharge conveyor directed towards the conveyor belts.

By using conveyor belts it is at the same time prevented that projecting parts of objects or parts attached to the objects, such as e.g. labels or the like attached to suitcases, can become wedged between and/or be torn off by moving parts of the device.

The invention will be explained in more detail hereafter with reference to an embodiment of the construction according to the invention diagrammatically illustrated in the accompanying Figures.

Figure 1 is a diagrammatic perspective view of an embodiment of a device according to the invention.

Figure 2 is a diagrammatic, larger-scale section of the area II encircled in Figure 1.

Figures 3 and 4 show variants of the embodiment shown in Figure 2.

Figures 5, 6 and 7 show possible embodiments of guide means used with the device according to the invention.

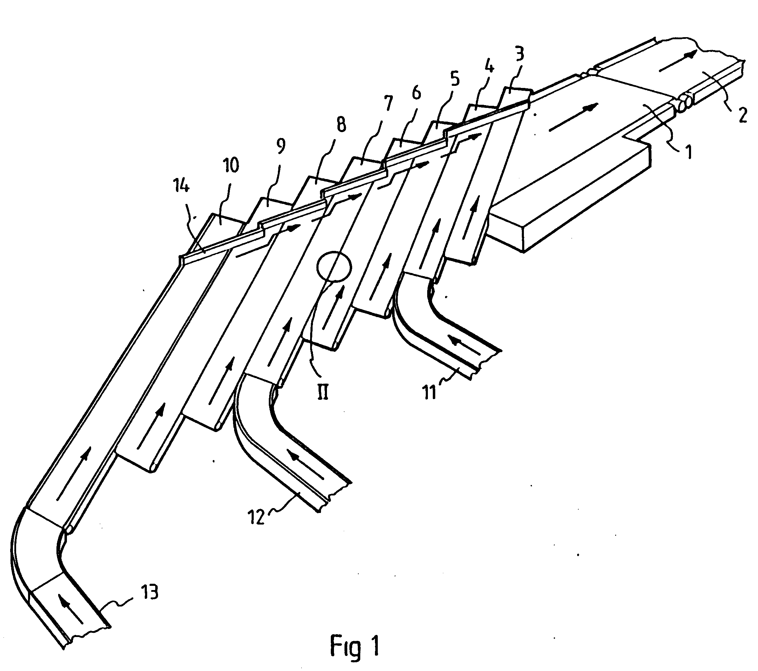

The device shown in Figure 1 comprises a main discharge conveyor, which in the illustrated embodiment is comprised of two endless conveyor belts 1 and 2 of a conventional construction being in line.

A number of auxiliary conveyor belts 3 - 10, eight in the illustrated embodiment, are arranged upstream of this main discharge conveyor. As will be apparent from Figure 1, the auxiliary conveyor belts 3 - 10 extend parallel to each other in adjoining relationship. The longitudinal axes of the auxiliary conveyor belts 3 - 10 thereby include an angle with the longitudinal direction of the discharge conveyor 1, 2, in such a manner that, when seen in the direction of movement of the upper parts of the conveyor belts 3 - 10 indicated by arrows in Figure 1, the downstream ends of the auxiliary conveyor belts 3 - 10 are located closer to the main discharge conveyor than the upstream ends.

Furthermore the construction of the drive means for the auxiliary conveyor belts 3 - 10 is such that an auxiliary conveyor belt located closer to the main discharge conveyor 1, 2 runs faster than an auxiliary conveyor belt located further from the main discharge conveyor; so the upper part of the auxiliary conveyor belt 6 moves at a greater speed in the direction indicated by the arrow than e.g. the upper part of the auxiliary conveyor belt 7.

Objects to be processed, such as air passengers' luggage, can now be supplied to the auxiliary conveyor belts 3 - 10 at different locations, using three supply belts 11 - 13 illustrated in the Figure. Of course it is also possible to use other means for supplying luggage to the auxiliary conveyor belts. Possibly the luggage can be placed on the auxiliary conveyor belts at random locations, direct from containers or lorries.

As is furthermore illustrated in Figure 1 guide means 14 extending transversely to the auxiliary conveyor belts are provided at the downstream ends of said auxiliary conveyor belts, said guide means 14 being comprised of plate-shaped means in the embodiment illustrated in Figure 1. Said guide means slightly overlap each other at their ends directed towards each other. The arrangement is thereby such that, when seen in the direction of movement of the objects across the auxiliary conveyor belts, a guide means 14 located closer to the main discharge conveyor 1, 2 has its end remote from the discharge conveyor spaced by some distance behind the adjacent end of a guide means 14 located further from the main discharge conveyor.

As a result of the above-described construction of the device according to the invention the objects present on the auxiliary conveyor belts located closer to the main discharge conveyor 1, 2 will be moved faster than the objects present on conveyor belts located further from the main discharge conveyor 1, 2. As a result of the different velocities with which the objects are moved and the staggered arrangement of the guide means 14, the objects to be displaced will be moved in such a manner that said objects will finally land on the main discharge conveyor, arranged in a row.

Since the objects will move across the auxiliary conveyor belts, in the direction of the main discharge conveyor 1, 2, during operation, comparatively large forces, acting transversely to the longitudinal direction of the conveyor belts, could be exerted on the upper parts of said belts. In connection therewith it is to be recommended to provide guide means for the conveyor belts which oppose a movement of the conveyor belts transversely to their longitudinal direction.

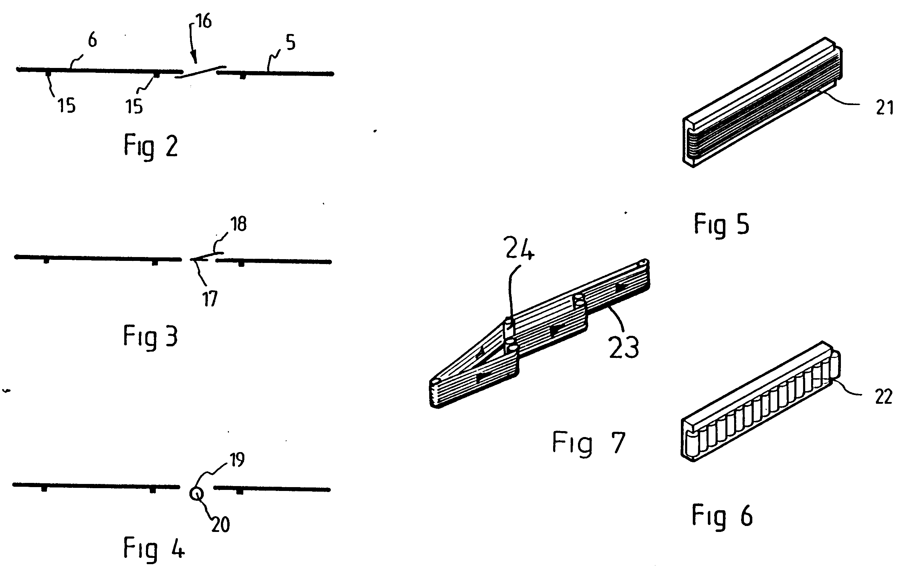

As is illustrated in Figures 2 - 4, this can be effected in the simple manner indicated in Figures 2 - 4. Said Figures are diagrammatic sections of the upper parts of the conveyor belts 5 and 6. As is furthermore indicated in said Figures, projecting ribs 15 may be attached to the inner sides of the conveyor belts, said ribs co-operating with corresponding grooves provided in the guide rollers of the endless conveyor belts. It will be apparent that in this manner any transverse forces exerted on the conveyor belts are transmitted by said ribs 15 to the conveyor rollers journalled in the frame (not shown) of the device.

As is furthermore shown in Figure 2 it may be desirable to provide guide means between the facing longitudinal edges of the upper parts of the conveyor belts, so as to ensure an even passage of the objects from the one conveyor belt to the adjacent conveyor belt. With the embodiment shown in Figure 2 a plate-shaped means 16 is used for this purpose, said means extending along the length of the upper parts of the auxiliary conveyor belts and sloping upwards from an end located under the upstream belt, to finally blend into an end located above the belt further downstream.

With the embodiment illustrated in Figure 3 use has been made of a guide plate 17 located between the facing boundary edges of two conveyor belts located side by side, the upper surface of said guide plate slightly sloping upwards from the belt located further upstream in the direction of the downstream belt and a projecting nose 18 of said guide plate 17 extending over said downstream belt.

Instead of stationary guide means, as in the embodiment according to Figures 2 and 3, it will also be possible to use one or more rollers 19 arranged between the facing edges of the conveyor belts; said rollers will be rotatable about axes of rotation 20 extending in the longitudinal direction of the conveyor belts.

With the embodiment illustrated in Figure 1 the guide means 14 are formed of rigid plates or strip-shaped parts.

As is diagrammatically illustrated in Figure 5 the guide means may also be provided with circumferential belts 21. Another possibility is to provide the guide means with a plurality of rollers 22, which are rotatable about upwardly extending axes of rotation, as is shown in Figure 6.

Another possibility is shown in Figure 7. Use is hereby made of a single endless belt 23, which is passed over a number of guide rollers 24 in the manner illustrated in Figure 7, such that, when seen in Figure 7, the front face which is active during operation and which comes into contact with the objects to be moved, has a stepped configuration.

The auxiliary conveyor belts 3 - 10 may also be arranged in such a manner that they slightly overlap near their longitudinal ends located near each other, whereby of course the longitudinal edge in question of an auxiliary conveyor belt located further from the discharge conveyor will be higher than the adjacent longitudinal edge of the auxiliary conveyor belt located closer to the discharge conveyor. With such an arrangement it will not be necessary to provide guide means such as illustrated in Figures 2 - 4.

The conveyor belts may thereby overlap each other horizontally as well as slightly obliquely, like tiles.

## Claims

1. A device for processing objects of different shapes and dimensions, which are supplied indiscriminately, in such a manner that they can be discharged one behind the other in a row by means of a discharge conveyor (1,2), a number of auxiliary conveyors (3-10) being arranged parallel and adjacent to each other upstream of the discharge conveyor, the longitudinal axes of said auxiliary conveyors including an angle deviating from 90° with the longitudinal axis of the discharge conveyor along at least part of their length, in such a manner that, when seen in the longitudinal direction of the discharge conveyor (1,2), the downstream ends of the auxiliary conveyors (3-10) are located closer to the discharge conveyor than the upstream ends of the auxiliary conveyors, and a drive mechanism for the auxiliary conveyors being constructed in such a manner that an auxiliary conveyor located closer to the discharge conveyor moves faster than an auxiliary conveyor located further from the discharge conveyor, whilst at least one guide means extending transversely to the auxiliary conveyors is provided near the downstream ends of said auxiliary conveyors, characterized in that the auxiliary conveyors are comprised of endless rectilinear conveyor belts located side by side, a number of elongated guide means (14;22;23) being provided near the downstream ends of said conveyor belts, the end of each guide means directed towards the discharge conveyor when seen in the direction of movement of the conveyor belts towards the guide means, being located at some distance before the end remote from the discharge conveyor of an adjacent guide means that is located closer to the discharge conveyor.

2. A device according to claim 1, characterized in that guide means (16;18;19) for the objects are provided between the longitudinal edges of the upper parts of two auxiliary conveyor belts which are located side by side.

3. A device according to claim 2, characterized in that said guide means are comprised of plate-shaped means, said plate-shaped means sloping upwards from the boundary edge of the upper part of an upstream auxiliary conveyor belt, in the direction of a conveyor belt located more downstream.

4. A device according to claim 3, characterized in that said plate-shaped means is provided with a part extending above the edge of the upper part of the conveyor belt located more downstream.

5. A device according to claim 2, characterized in that said guide means are comprised of rollers arranged between the facing boundary edges of the upper parts of the conveyor belts, said rollers being rotatable about axes of rotation extending in the longitudinal direction of the auxiliary conveyor belts.

6. A device according to any one of the preceding claims, characterized in that said elongated guide means (22) comprise rollers arranged side by side, which are rotatable about upwardly extending axes of rotation.

7. A device according to any one of the preceding claims 1 - 5, characterized in that a guide means (21) is comprised of an endless belt moving in a circular path during operation.

8. A device according to any one of the preceding claims 1 - 6, characterized in that said guide means (23) are comprised of parts of an endless belt moving in a circular path during operation, said parts being staggered with respect to each other.

9. A device according to any one of the preceding claims, characterized in that adjacent auxiliary conveyor belts slightly overlap each other at their adjacent longitudinal edges.

## Patentansprüche

1. Vorrichtung zum Behandeln von Gegenständen unterschiedlicher Form und Größe, die so nicht-diskriminierend zugeführt werden, daß sie von einem Abgabeförderer (1, 2) einer nach dem anderen in einer Reihe abgegeben werden können, mit einer Zahl von Hilfsförderern (3-10), die parallel und benachbart zueinander stromauf von dem Abgabeförderer angeordnet sind, wobei die Längsachsen der Hilfsförderer wenigstens entlang eines Teils ihrer Längen einen von 90° abweichenden Winkel mit der Längsachse des Abgabeförderers bilden, so daß bei Betrachtung entlang der Längsrichtung des Abgabeförderers (1, 2) die Stromabenden der Hilfsförderer (3-10) näher an dem Abgabeförderer positioniert sind als die Stromaufenden der Hilfsförderer, und einem Antriebsmechanismus für die Hilfsförderer, der so aufgebaut ist, daß ein Hilfsförderer, der näher an dem Abgabeförderer angeordnet ist, sich schneller bewegt als ein Hilfsförderer, der weiter weg von dem Abgabeförderer angeordnet ist, wobei wenigstens ein Führungsmittel, das sich schräg zu den Hilfsförderern erstreckt, nahe den Stromabenden der Hilfsförderer vorgesehen ist, dadurch gekennzeichnet, daß die Hilfsförderer nebeneinander angeordnete, geradlinige Endlosförderbänder aufweisen, eine Zahl von länglichen Führungsmitteln (14; 22; 23) nahe den Stromabenden der Förderbänder vorgesehen sind, wobei das Ende jedes Führungsmittels, die sich zu dem Abgabeförderer erstrecken, mit einiger Entfernung vor dem Ende angeordnet ist, das von dem Abgabeförderer eines benachbarten Führungsmittels entfernt ist, welches näher zu dem Abgabeförderer angeordnet ist, wenn die Betrachtung in Richtung der Bewegung der Förderbänder zu den Führungsmitteln erfolgt.

2. Vorrichtung nach Anspruch 1, dadurch gekennzeichnet, daß Führungsmittel (16; 18; 19) für die Gegenstände zwischen den Längskanten der oberen Abschnitte von zwei Hilfsförderbändern, die nebeneinander angeordnet sind, vorgesehen sind.

3. Vorrichtung nach Anspruch 2, dadurch gekennzeichnet, daß die Führungsmittel plattenförmige Führungsmittel sind, die sich von der Endkante des oberen Teils eines stromauf gelegenen Hilfsförderbandes in Richtung eines mehr stromab angeordneten Förderbandes nach oben neigen.

4. Vorrichtung nach Anspruch 3, dadurch gekennzeichnet, daß die plattenförmigen Mittel einen Abschnitt aufweisen, der sich oberhalb der Kante des oberen Abschnitts des Förderbandes, das mehr stromab angeordnet ist, erstreckt.

5. Vorrichtung nach Anspruch 2, dadurch gekennzeichnet, daß die Führungsmittel Rollen aufweisen, die zwischen den gegenüberliegenden Endkanten der oberen Abschnitte der Förderbänder angeordnet sind, wobei die Rollen um Drehachsen drehbar sind, die sich in die Längsrichtung der Hilfsförderbänder erstrecken.

6. Vorrichtung nach einem der vorhergehenden Ansprüche, dadurch gekennzeichnet, daß das längliche Führungsmittel (22) nebeneinander angeordnete Rollen aufweist, die um sich nach oben erstreckende Drehachsen drehbar sind.

7. Vorrichtung nach einem der Ansprüche 1-5, dadurch gekennzeichnet, daß Führungsmittel (21) ein Endlosband darstellen, das sich bei Betrieb entlang eines kreisförmigen Weges bewegt.

8. Vorrichtung nach einem der Ansprüche 1-6, dadurch gekennzeichnet, daß die Führungsmittel (23) Abschnitte eines Endlosbandes aufweisen, das sich bei Betrieb entlang eines kreisförmigen Weges bewegt, wobei die Abschnitte versetzt zueinander angeordnet sind.

9. Vorrichtung nach einem der vorhergehenden Ansprüche, dadurch gekennzeichnet, daß benachbarte Hilfsförderbänder sich jeweils an ihren benachbarten Längskanten etwas überlappen.

## Revendications

1. Dispositif pour manipuler des objets de formes et de dimensions différentes qui sont fournis sans discrimination, d'une manière telle qu'ils peuvent être évacués les uns derrière les autres en une rangée au moyen d'un transporteur d'évacuation (1,2), une pluralité de transporteurs auxiliaires (3-10) étant agencés parallèlement les uns aux autres et mutuellement adjacents en amont du transporteur d'évacuation, les axes longitudinaux desdits transporteurs auxiliaires ayant un angle s'écartant de 90° par rapport à l'axe longitudinal du transporteur d'évacuation le long d'au moins une partie de leur longueur d'une manière telle que, lorsqu'on les regarde dans la direction longitudinale du transporteur d'évacuation (1,2), les extrémités aval des transporteurs auxiliaires (3-10) sont situées plus près du transporteur d'évacuation que les extrémités amont des transporteurs auxiliaires, et un mécanisme d'entraînement pour les transporteurs auxiliaires étant construit d'une manière telle qu'un transporteur auxiliaire situé plus près du transporteur d'évacuation se déplace plus vite qu'un transporteur auxiliaire situé plus loin du transporteur d'évacuation, tandis qu'au moins un dispositif de guidage s'étendant transversalement aux transporteurs auxiliaires est prévu près des extrémités aval desdits transporteurs auxiliaires, caractérisé en ce que les transporteurs auxiliaires sont constitués de bandes transporteuses rectilignes sans fin placées côte à côte, une pluralité de dispositifs de guidage allongés (14;22;23) étant prévus près des extrémités aval desdites bandes transporteuses, l'extrémité de chaque dispositif de guidage dirigée vers le transporteur d'évacuation étant située, lorsqu'on regarde dans la direction de déplacement des bandes transporteuses vers le dispositif de guidage, à une certaine distance avant l'extrémité,éloignée du transporteur d'évacuation, d'un dispositif de guidage adjacent qui est situé plus près du transporteur d'évacuation.

2. Dispositif suivant la revendication 1, caractérisé en ce que les dispositifs de guidage (16;18;19) pour les objets sont prévus entre les bords longitudinaux des parties supérieures de deux bandes transporteuses auxiliaires qui sont placées côte à côte.

3. Dispositif suivant la revendication 2, caractérisé en ce que lesdits dispositifs de guidage sont composés d'éléments en forme de plaque, lesdits éléments en forme de plaque étant inclinés vers le haut à partir du bord de délimitation de la partie supérieure d'une bande transporteuse auxiliaire amont, dans la direction d'une bande transporteuse située plus en aval.

4. Dispositif suivant la revendication 3, caractérisé en ce que lesdits éléments en forme de plaque comportent une partie s'étendant au-dessus du bord de la partie supérieure de la bande transporteuse située plus en aval.

5. Dispositif suivant la revendication 2, caractérisé en ce que lesdits dispositifs de guidage sont composés de rouleaux agencés entre les bords de délimitation en regard des parties supérieures des bandes transporteuses, lesdits rouleaux pouvant tourner autour d'axes de rotation qui s'étendent dans la direction longitudinale des bandes transporteuses auxiliaires.

6. Dispositif suivant une quelconque des revendications précédentes, caractérisé en ce que lesdits dispositifs de guidage allongés (22) comportent des rouleaux agencés côte à côte, qui peuvent tourner autour d'axes de rotation s'étendant vers le haut.

7. Dispositif suivant une quelconque des revendications précédentes 1 à 5, caractérisé en ce qu'un dispositif de guidage (21) est constitué d'une bande sans fin se déplaçant suivant un chemin circulaire pendant le fonctionnement.

8. Dispositif suivant une quelconque des revendications précédentes 1 à 6, caractérisé en ce que lesdits dispositifs de guidage (23) sont composés de parties d'une bande sans fin se déplaçant suivant un chemin circulaire pendant le fonctionnement, lesdites parties étant décalées les unes par rapport aux autres.

9. Dispositif suivant une quelconque des revendications précédentes, caractérisé en ce que les bandes transporteuses auxiliaires adjacentes se chevauchent légèrement à l'endroit de leurs bords longitudinaux adjacents.
